# DEMANDE DE BREVET EUROPEEN

(11) **EP 1 255 095 A1**
(43) Date de publication de la demande: **06.11.2002**
(21) Numéro de dépôt: 02291046.7
(22) Date de dépôt: 25.04.2002
(51) Int. Cl.: G01F 3/08

(54) **Procédé de fabrication d'un compteur de liquide volumétrique du type à piston oscillant**

(30) Priorité: 27.04.2001 FR 0105844
(71) Demandeur: Actaris S.A.S., 92542 Montrouge (FR)
(72) Inventeur: Demia, Laurent, 71000 Macon (FR); Petite, Michel, 71000 Macon (FR)
(74) Mandataire: Lenne, Laurence

(57) **Abrégé**

Procédé de fabrication d'un compteur de liquide volumétrique du type à piston oscillant comprenant une chambre de mesure cylindrique 30 comportant les éléments suivants : une partie inférieure 16 formée par une paroi latérale 2 et un fond 1 munie d'une ouïe d'entrée 7, sur laquelle vient s'emboîter une partie supérieure 17 comportant un couvercle 2 muni d'une ouïe de sortie 8, une cloison fixe 9 disposée entre la partie inférieure et supérieure, un piston 11 de forme cylindrique disposé de façon excentrique et guidé cinématiquement dans la chambre par l'intermédiaire de la cloison 9 dans une fente 15 dudit piston, un filtre 20 emmanché sur ladite chambre 30 destiné à filtrer le liquide pénétrant dans l'ouïe d'entrée, et un joint d'étanchéité 49 destiné à forcer l'écoulement du liquide à travers la chambre de mesure en évitant l'écoulement direct du liquide d'une tubulure d'admission vers une tubulure d'évacuation du compteur,
ledit procédé consistant à fabriquer au moins l'un desdits éléments par un procédé de moulage par injection au moyen d'un moule de forme adaptée audit élément à fabriquer, caracténsé en ce que le procédé comporte les étapes suivantes:
- injecter un premier matériau pour former au moins une partie d'une peau de l'élément, puis
- injecter au moins un second matériau, présentant des caractéristiques mécaniques différentes du premier matériau, pour former une âme de l'élément.

## Description

L'invention se rapporte à un procédé de fabrication d'un compteur de liquide volumétrique du type à piston oscillant et également au compteur de liquide volumétrique fabriqué par le procédé de fabrication selon l'invention. Un tel compteur comprend une chambre de mesure cylindrique formée par différents éléments : une partie inférieure comportant une paroi latérale et un fond munie d'une ouïe d'entrée, sur laquelle vient s'emboîter une partie supérieure comportant un couvercle muni d'une ouïe de sortie, une cloison fixe disposée entre la partie inférieure et supérieure, un piston de forme cylindrique disposé de façon excentrique et guidé cinématiquement dans la chambre par l'intermédiaire de la cloison dans une fente dudit piston, un filtre emmanché sur ladite chambre destiné à filtrer le liquide pénétrant dans l'ouïe d'entrée, et un joint d'étanchéité destiné à forcer l'écoulement du liquide à travers la chambre de mesure en évitant l'écoulement direct du liquide d'une tubulure d'admission vers une tubulure d'évacuation du compteur. Généralement, le procédé de fabrication desdits éléments consiste en un moulage par injection au moyen d'un moule de forme adaptée aux éléments à fabriquer.

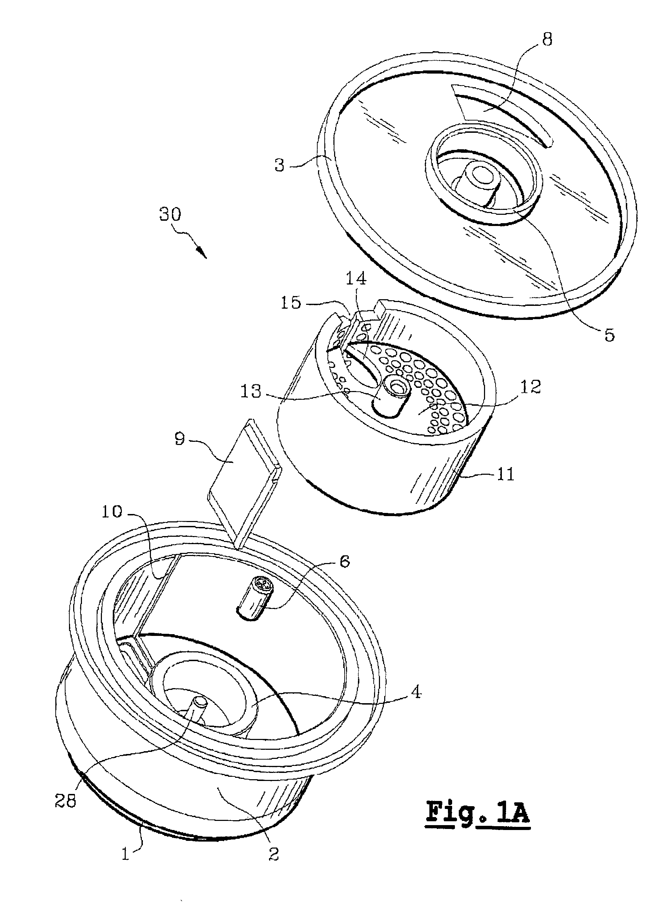

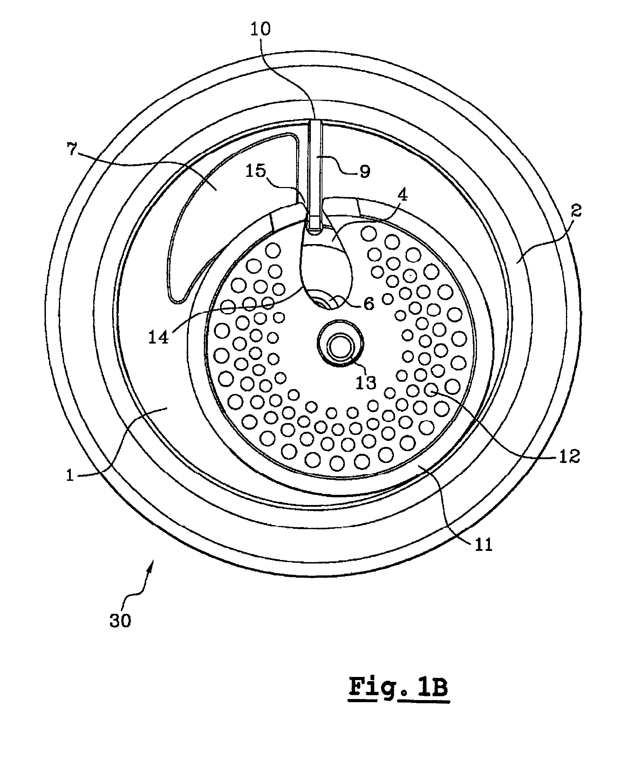

Dans ce type de compteur, la chambre de mesure telle que représentée sur les figures 1.A à 1.B est l'élément essentiel dont dépend la précision de mesure du débit. La boîte mesurante est une chambre de forme cylindrique 30 qui comprend un fond 1, une paroi latérale 2 et un couvercle 3. Le fond 1 et le couvercle 3 comportent un cylindre inférieur 4 et supérieur 5 respectivement, de même diamètre, ce diamètre étant inférieur à celui de la chambre. Les deux cylindres 4, 5 sont centrés sur l'axe de la chambre. Le cylindre inférieur comporte en son centre une tige métallique 28 sur laquelle vient s'emboîter un galet 6. Le fond et le couvercle sont munis d'au moins une ouïe d'entrée 7 et une ouïe de sortie 8 pour l'admission et l'évacuation du fluide dans la chambre respectivement. La chambre 30 comporte également une cloison fixe 9 de forme rectangulaire, séparant l'ouïe d'entrée 7 et l'ouïe de sortie 8. La cloison s'étend radialement entre la paroi latérale 2 et les cylindres inférieur 4 et supérieur 5 et axialement entre le fond 1 et le couvercle 3. La cloison 9 a une forme rectangulaire et comporte deux faces sensiblement parallèles. La cloison possède deux fonctions principales, d'une part assurer le guidage cinématique du piston, et d'autre part assurer l'étanchéité entre les ouïes d'entrée et de sortie. Ces fonctions, en particulier celle relative à l'étanchéité induisent un positionnement précis de la cloison et un jeu très faible entre la cloison et la rainure. Le fond, la paroi latérale, le couvercle et les cylindres inférieur et supérieur comportent une rainure 10 dans laquelle vient s'encastrer la cloison. Un piston 11 de forme cylindrique de diamètre inférieur à celui de la chambre mais supérieur aux diamètres des cylindres inférieur et supérieur est positionné de manière excentrique à l'intérieur de la chambre. Le piston 11 comporte à mi-hauteur une paroi plane 12 perforée de trous et supportant en son centre deux tétons 13, l'un dirigé vers le fond, l'autre vers le couvercle. La paroi comporte également une lumière 14 en forme de poire orientée radialement et positionné de manière excentrique. La lumière en forme de poire débouche sur une fente 15 pratiquée sur toute la hauteur du piston.

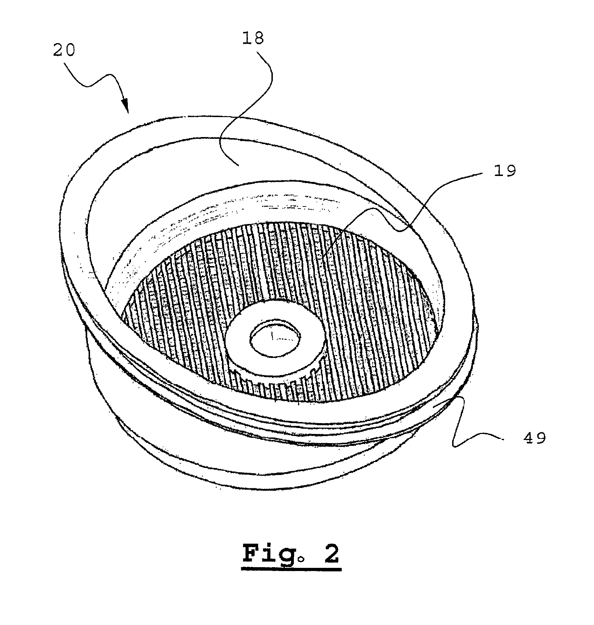

Il est également courant d'employé un filtre 20, comme représenté sur la figure 2, avec une telle chambre de mesure. Le filtre 20 de forme cylindrique comprend un fond 19 et une paroi latérale 18. Le fond 19 forme un tamis pour retenir des particules d'une taille plus importante que celle de la maille du tamis. Le filtre 20 est destiné à venir s'emmancher sur la chambre de forme cylindrique 30, en particulier le tamis 19 vient en contact avec le fond 1, et la paroi latérale 18 du filtre s'ajuste contre la paroi latérale 2 de la chambre de sorte que tout le liquide pénétrant dans l'ouïe d'entrée 7 passe préalablement au travers du filtre.
Le filtre est également muni d'un joint d'étanchéité périphérique sous forme d'une protubérance. Cette protubérance peut être un demi-joint torique ou une lèvre flexible. Ce joint assure l'étanchéité entre la boîte mesurante et la bâche du compteur (non représentée) dans laquelle elle est disposée de sorte que le liquide pénétrant par la tubulure d'entrée (non représentée) de la bâche du compteur ne ressort par la tubulure de sortie (non représentée) qu'après avoir pénétré dans la boîte mesurante.

Le débitmètre comportant une telle boîte mesurante fonctionne selon le principe de l'admission d'un volume donné de fluide par l'ouïe d'entrée dans le piston qui en communiquant son énergie au piston provoque son déplacement en rotation et son évacuation vers l'ouïe de sortie. Ainsi, chaque révolution du piston correspond au passage d'un volume de fluide donné. Le mouvement général du piston est un mouvement oscillant, l'axe du piston décrivant un cercle autour de l'axe de la chambre et la fente du piston glissant le long de la cloison. Le piston est guidé cinématiquement dans la chambre grâce à l'engagement de la cloison dans la fente verticale et dans la lumière en forme de poire ainsi que par l'engagement du téton entre le galet et le cylindre inférieur. La paroi plane du piston, bien que positionnée entre le cylindre inférieur et supérieur, reste libre de se mouvoir dans un plan.

Les différents éléments formant la chambre mesurante sont fabriqués par moulage par injection, chaque élément étant fabriqué au moyen d'un moule de forme adaptée. Le procédé d'injection employé est un procédé classique bien connu de l'homme du métier. Le matériau employé est un thermoplastique.
Afin d'améliorer les caractéristiques mécaniques de ces différents éléments, notamment en terme de résistance mécanique, de coefficient de frottement, de masse volumique, d'absorption des chocs ou encore d'étanchéité, il est usuel de faire subir à ces éléments un traitement de surface. Le traitement de surface dépend de la fonction spécifique que doit remplir ledit élément. Ce traitement consiste à déposer un matériau de manière superficielle, par exemple 1/100eme d'épaisseur, sur l'élément démoulé.
Il est également connu de modifier la structure de l'élément afin d'ajouter de nouvelles fonctions audit élément. Le brevet EP0627614 décrit un compteur de liquide à piston oscillant comportant une cloison dont le profil est bi-concave. La forme particulière permet d'optimiser le jeu entre le piston et la cloison afin de réduire l'amplitude des chocs. Le brevet WO932263 décrit un compteur d'eau à piston oscillant dans lequel la surface de la paroi du piston entrant en contact avec la surface intérieure de la chambre de mesure est rainurée. Le rainurage du piston permet de réduire les frottement sur la paroi de la chambre et de réduire les dommages générés dans le compteur par des particules entraînées avec l'eau.
Les méthodes employées pour l'adjonction de nouvelles fonctions, ou l'amélioration des caractéristiques mécaniques des différents éléments constituant la chambre mesurante sont compliquées et conduisent à des procédés de fabrication et de montage des différents éléments complexes et coûteuses.

Un objet de l'invention est de proposer une méthode de fabrication simplifiée qui permette de fabriquer directement par un procédé de moulage par injection les différents éléments avec des caractéristiques mécaniques améliorés et adaptés à certaines fonctions de la pièce, sans qu'il soit nécessaire de pratiquer des traitements de surface postérieurs au démoulage et sans qu'il soit nécessaire de modifier la structure des éléments existants.

Cet objet est atteint grâce à un procédé selon l'invention consistant à fabriquer au moins l'un des éléments du compteur dont on souhaite améliorer les caractéristiques mécaniques par un procédé de moulage par injection au moyen d'un moule de forme adaptée audit élément à fabriquer, le procédé comportant les étapes suivantes:
- injecter un premier matériau pour former au moins une partie d'une peau de l'élément, puis
- injecter au moins un second matériau, présentant des caractéristiques mécaniques différentes du premier matériau, pour former une âme de l'élément.

Ce procédé d'injection appelé procédé bi-matières ou multi-matières permet d'obtenir directement après démoulage, un élément du compteur présentant des caractéristiques mécaniques améliorés et spécifiques avec des fonctions supplémentaires, sans qu'il soit nécessaire de faire subir à cet élément des traitements ultérieurs. En outre, l'âme et la peau de cet élément du compteur ont des caractéristiques mécaniques différentes, chacune pouvant réaliser des fonctions différentes.

A titre d'exemple, les fonctions recherchées sont :
- l'amélioration de la résistance mécanique du piston en fabriquant un piston dont l'âme est composée d'un matériau plus résistant que celui de la peau,
- l'amélioration du coefficient de frottement du piston, de la partie inférieure ou de la partie supérieure en fabricant lesdits éléments avec une peau composée d'un matériau ayant de bonnes caractéristiques de frottement et une âme composée d'un matériau apportant de la résistance mécanique ou de la légèreté,
- l'allégement du piston, de la partie inférieure ou de la partie supérieure en fabricant lesdits éléments avec une peau composée d'un matériau ayant une masse volumique faible et une âme composé d'un matériau apportant de la résistance mécanique, ou l'inverse,
- l'amélioration du passage des corps étrangers présents dans le liquide traversant le compteur sans endommager le compteur en fabriquant le piston, la partie inférieure ou la partie supérieure avec une âme composée d'un matériau rigide et une peau composée d'un matériau présentant des propriétés d'élasticité importantes,
- la diminution du bruit généré par le compteur en fabriquant le piston, la partie inférieure ou la partie supérieure avec une âme composée d'un matériau rigide et une peau composée d'un matériau présentant des propriétés d'absorption des chocs importantes,
- l'intégration de la fonction d'étanchéité à la chambre de mesure, en fabriquant une partie inférieure ou un filtre à emmancher sur la partie inférieure comportant un joint d'étanchéité élastomère intégré.

D'autres caractéristiques et avantages de l'invention apparaîtront dans la description suivante détaillée, non limitative, de divers modes de réalisation, en référence aux dessins annexés parmi lesquels :
- les figures 1.A, 1.B représentent une chambre de mesure connue d'un compteur volumétrique de fluide selon une vue éclatée et une vue de dessus respectivement ;
- la figure 2 représente un filtre destiné à être emmanché sur la chambre de mesure ;
- les figures 3.A, 3.B, 3.C représentent différentes étapes successives du procédé de fabrication d'un piston selon l'invention ;
- les figures 4.A, 4.B représentent différentes étapes successives du procédé de fabrication d'une partie inférieure de la chambre de mesure selon l'invention ;
- les figures 5.A, 5.B, 5.C représentent différentes étapes successives du procédé de fabrication d'une partie supérieure de la chambre de mesure selon l'invention.

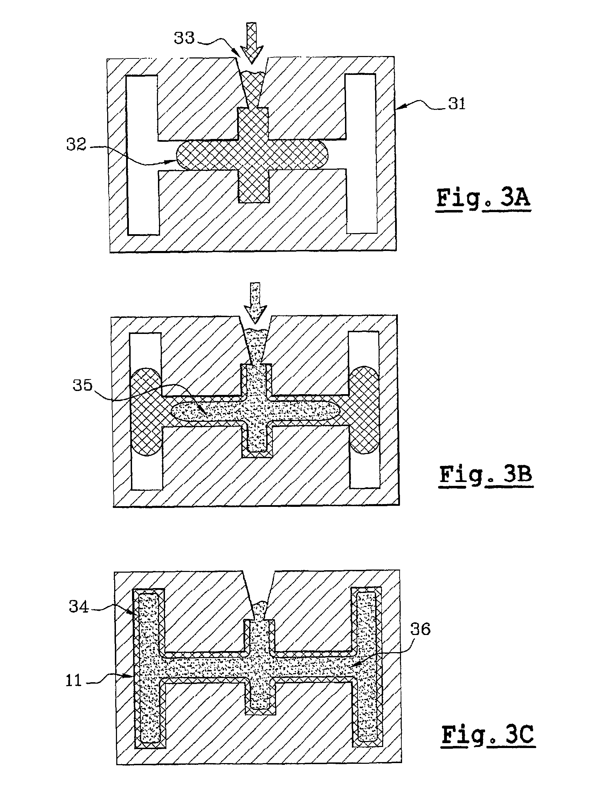

Le procédé de fabrication selon l'invention va être décrit en relation avec un premier mode de réalisation consistant à fabriquer un piston, le procédé étant représenté sur les figures 3.A, 3.B et 3.C.
Le procédé consiste à fabriquer le piston 11 au moyen d'un moule 31 de forme adaptée.

Un premier matériau 32 est injecté dans le moule par l'intennédiaire d'une ouverture 33 pratiquée dans le corps du moule. Ce premier matériau est destiné à former une partie de la peau 34 du piston.
Un second matériau 35 est injecté après le premier par l'intermédiaire de la même ouverture. Ce second matériau s'écoule à l'intérieur du premier matériau en formant l'âme 36 de l'élément.
La figure 3.A montre l'injection du premier matériau 32 à l'intérieur de l'empreinte ou moule 31 après une certaine durée. La figure 3.B montre l'injection du second matériau 35 à un stade ultérieur. La figure 3.C montre le stade final lorsque les matériaux formant le piston 11 ont été injectés en totalité.
A titre d'alternative, la finition du piston peut être effectuée en ré-injectant une petite quantité du premier matériau dès la fin de l'injection du second matériau. De cette façon, il est possible d'obtenir un piston présentant une peau 34 continue composée exclusivement du premier matériau.

L'injection est effectuée par des unités d'injection dont les flux de matériaux sont regroupés dans un canal commun. Les unités d'injection permettent l'injection de plusieurs matériaux différents tout en garantissant une liaison mécanique parfaite entre les matériaux. De telles unités d'injection sont bien connues de l'homme du métier.

Une première variante de réalisation du procédé selon le premier mode de réalisation de l'invention permet de réaliser un piston constitué d'une âme en matériau plastique présentant une résistance mécanique élevée et d'une peau en matériau ayant un coefficient de frottement faible. Un piston ainsi fabriqué présente un coefficient de frottement réduit permettant d'améliorer les performances du compteur de liquide volumétrique, en particulier les performances métrologiques avec une meilleure endurance dans le temps, un débit de démarrage plus faible et une tenue en température améliorée. Par ailleurs, les coûts de fabrication d'un tel piston sont plus faibles que ceux de l'art antérieur consistant à faire subir des traitements de surface au cours du procédé de fabrication.
Le procédé de fabrication d'un tel piston consiste à injecter en tant que premier matériau, un matériau ayant un coefficient de frottement faible pour former la peau du piston, puis à injecter en tant que second matériau, un matériau plastique présentant une résistance mécanique élevée pour former l'âme du piston. Le premier matériau peut être par exemple du PTFE ou un autre polymère fluoré. Le second matériau peut être par exemple choisi parmi les styréniques tels que le polystyrène (PS), l'acrylonitrile butadiène styrène (ABS), ou le styrène acrylonitrile (SAN), les polyacryliques tels que le polyméthacrylate de méthyle amorphe (PMMA), les polycarbonates (PC), les polysulfones (PSU), les polyphénylines oxydés (PPO), ou les polysulfures de phénylene (PPS).

La seconde variante de réalisation du procédé selon le premier mode de réalisation de l'invention permet de réaliser un piston composé d'une âme en matériau plastique et d'une peau en matériau plastique plus résistant que le matériau de l'âme. Un piston ainsi fabriqué présente des caractéristiques mécaniques améliorés, en particulier une meilleure tenue en température, une meilleure tenue mécanique aux particules et une tenue améliorée vis à vis des différents types de liquides pouvant traverser le compteur.
Le procédé de fabrication d'un tel piston consiste à injecter le premier matériau, par exemple un polysulfone graphité, pour former la peau du piston, puis à injecter le second matériau, par exemple un polyoléfine, pour former l'âme du piston, le premier matériau étant plus résistant que le second matériau.

La troisième variante de réalisation du procédé selon le premier mode de réalisation de l'invention permet de réaliser un piston constitué d'une âme en matériau plastique présentant une résistance mécanique élevée et la peau en matériau présentant une masse volumique faible. Un piston ainsi fabriqué est plus léger qu'un piston de l'art antérieur tout en conservant des caractéristiques mécaniques élevées permettant également d'améliorer les performances du compteur de liquide volumétrique. En particulier un piston fabriqué selon ce procédé présente une tenue améliorée aux liquides agressifs (chargés de particules ou chimiquement agressifs) pouvant traversés le compteur, une métrologie améliorée, un débit de démarrage plus faible.
Le procédé de fabrication d'un tel piston consiste à injecter en tant que premier matériau, un matériau ayant une masse volumique faible, par exemple un polyoléfine, pour former la peau du piston, puis à injecter en tant que second matériau, un matériau plastique présentant une résistance mécanique élevée, par exemple un matériau choisi parmi les styréniques ou les polyacryliques, pour former l'âme du piston.

La quatrième variante de réalisation du procédé selon le premier mode de réalisation de l'invention permet de réaliser un piston constitué d'une âme en matériau rigide et d'une peau en matériau élastomère. Un piston ainsi fabriqué permet un passage facilité des particules emmenées par le liquide dans la chambre de mesure sans détérioration de cette dernière. En effet, lorsqu'une particule pénètre dans la chambre, la peau du piston va se déformer localement et épouser la forme de la particule sans qu'il y ait détérioration des surfaces ou blocages entre le piston et la surface de paroi de la partie inférieure en contact avec le piston.
Le procédé de fabrication d'un tel piston consiste à injecter en tant que premier matériau, un matériau élastomère, par exemple du Santoprène commercialisé par la société Monsanto, de l'Huytrel commercialisé par la société Dupont de Nemours ou de l'EPDM (Ethylène Propylène Diène Monomère) commercialisé par Hüls, pour former la peau du piston, puis à injecter en tant que second matériau, un matériau en plastique rigide pour former l'âme du piston.

A titre d'alternative (non représentée sur les figures) pour l'ensemble des variantes présentées précédemment, des éléments en matériau de masse volumique faible, par exemple les polyoléfines, sont positionnés dans les différents moules avant les étapes d'injection. Les éléments peuvent être par exemple de forme cylindrique.
A titre d'exemple, on pourra choisir comme polyoléfines, le polypropylène, le TPX, ou le polyéthylène basse ou haute densité.
On peut ainsi obtenir un piston constitué d'une âme en matériau plastique présentant une résistance mécanique élevée dans lequel sont noyés des éléments en matériau présentant une masse volumique faible.

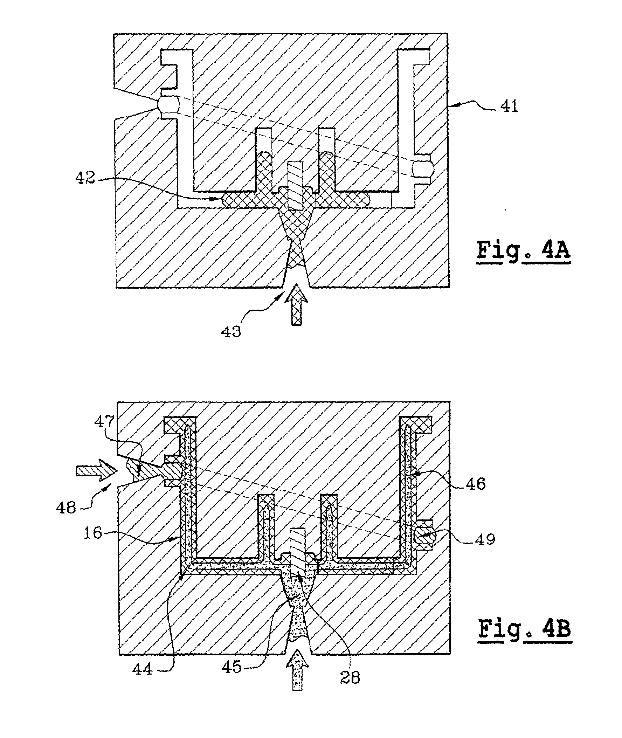

Le procédé de fabrication selon l'invention va être décrit en relation avec un second mode de réalisation consistant à fabriquer une partie inférieure de la chambre de mesure. Ce procédé est représenté sur les figures 4.A et 4.B.

Une première variante de réalisation du procédé selon le second mode de réalisation de l'invention permet de réaliser une partie inférieure comportant un joint d'étanchéité intégré sous forme d'une protubérance en matériau élastomère, ledit joint étant intégré dans la paroi latérale extérieure de la partie inférieure.
Le procédé consiste à fabriquer la partie inférieure de la chambre de mesure au moyen d'un moule 41 de forme adaptée. Un axe en inox 28 peut être positionné au préalable dans un alésage pratiqué dans le moule.
Un premier matériau est injecté dans le moule par l'intermédiaire d'une ouverture pratiquée dans le corps du moule. Ce premier matériau est destiné à former le corps de la partie inférieure. Un second matériau est injecté par une seconde ouverture afin de former un joint intégré sur la périphérie de la partie inférieure.
Cette protubérance peut être un demi-joint torique ou une lèvre flexible.
Il est également envisageable de fabriquer une partie inférieure 16 de la chambre de mesure avec trois matériaux distincts tel que représenté aux figures 4.A et 4.B. La figure 4.A montre l'injection du premier matériau à l'intérieur de l'empreinte ou moule après une certaine durée. La figure 4.B montre le stade final lorsque le second et le troisième matériau ont été injectés en totalité pour former la partie inférieure de la chambre de mesure. Un premier matériau 42 est injecté dans le moule par l'intermédiaire d'une ouverture 43 pratiquée dans le corps du moule. Ce premier matériau est destiné à former une partie de la peau 44 de la partie inférieure de la chambre de mesure. Un second matériau 45 est injecté après le premier par l'intermédiaire de la même ouverture. Ce second matériau s'écoule à l'intérieur du premier matériau en formant l'âme 46 de l'élément. Simultanément, un troisième matériau 47 est injecté par une seconde ouverture 48 afin de former un joint intégré 49 sur la périphérie de la partie inférieure.

Une seconde variante de réalisation du procédé selon le second mode de réalisation de l'invention permet de réaliser une partie inférieure composée d'une âme en matériau plastique présentant une résistance mécanique élevée et une peau, en particulier les surfaces de la peau en contact avec le piston en matériau ayant un coefficient de frottement faible.
Le procédé de fabrication d'une telle partie inférieure consiste à injecter en tant que premier matériau, un matériau ayant un coefficient de frottement faible, par exemple du PTFE ou un autre polymère fluoré, pour former la peau, puis à injecter en tant que second matériau, un matériau plastique présentant une résistance mécanique élevée, par exemple du SAN, de l'ABS, ou du PSU, pour former l'âme de ladite partie inférieure.

Pour cette seconde variante, une alternative (non représentée sur les figures) au procédé permet de réaliser un filtre 20 composé d'un matériau plastique présentant une résistance mécanique élevée et intégrant un joint d'étanchéité 49 sous forme d'une protubérance en matériau élastomère, par exemple un caoutchouc thermoplastique vulcanisé TPV comme le Santoprene, l'EPDM ou un polychloroprene.
Cette protubérance peut être un demi-joint torique ou une lèvre flexible.
Le filtre ainsi réalisé est emmanché sur la partie inférieure de la chambre de mesure.
Le procédé consiste à fabriquer le filtre avec un joint d'étanchéité intégré en injectant en tant que premier matériau, un matériau plastique présentant une résistance mécanique élevée pour former le filtre 20, puis à injecter en tant que second matériau, un matériau élastomère pour former le joint d'étanchéité 49.

A titre d'alternative pour les variantes du second mode de réalisation, la finition de la partie inférieure peut être effectuée en ré-injectant une petite quantité du premier matériau dès la fin de l'injection du second matériau. De cette façon, il est possible d'obtenir un piston présentant une peau continue composée exclusivement du premier matériau.

Une autre alternative pour les variantes du second mode de réalisation consiste à injecter comme premier matériau, un matériau élastomère, pour former la peau afin d'améliorer le passage des particules.

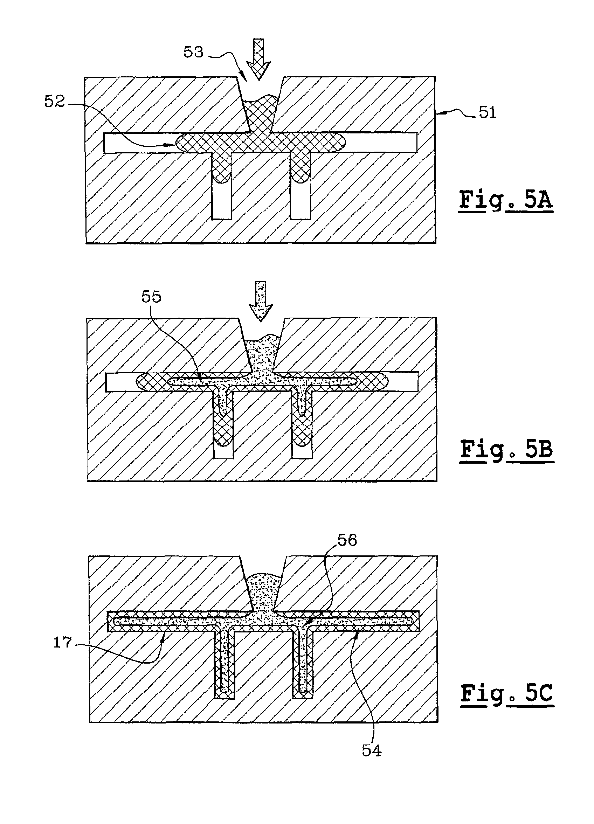

Le procédé de fabrication selon l'invention va être décrit en relation avec un troisième mode de réalisation consistant à fabriquer la partie supérieure, le procédé étant représenté sur les figures 5.A, 5.B et 4.C.
Le procédé consiste à fabriquer la partie supérieure 17 de la chambre de mesure au moyen d'un moule 51 de forme adaptée.
Un premier matériau 52, par exemple du PTFE ou un autre polymère fluoré, est injecté dans le moule par l'intermédiaire d'une ouverture 53 pratiquée dans le corps du moule. Ce premier matériau ayant un coefficient de frottement faible est destiné à former au moins les surfaces de la peau 54 de la partie supérieure 17 en contact avec le piston.
Un second matériau 55 qui présente une résistance mécanique élevée, par exemple du PPS, du PMMA ou du PC, est injecté après le premier par l'intermédiaire de la même ouverture 53. Ce second matériau s'écoule à l'intérieur du premier matériau en formant l'âme 56 de la partie supérieure.
La figure 5.A montre l'injection du premier matériau 52 à l'intérieur de l'empreinte ou moule 51 après une certaine durée. La figure 5.B montre l'injection du second matériau 55 à un stade ultérieur. La figure 5.C montre le stade final lorsque les matériaux formant la partie supérieure ont été injectés en totalité.
A titre d'alternative, la finition de la partie supérieure peut êire effectuée en ré-injectant une petite quantité du premier matériau 52 dès la fin de l'injection du second matériau 55. De cette façon, il est possible d'obtenir une partie supérieure présentant une peau 54 continue composée exclusivement du premier matériau.

## Revendications

1. Procédé de fabrication d'un compteur de liquide volumétrique du type à piston oscillant comprenant une chambre de mesure cylindrique (30) comportant les éléments suivants :
une partie inférieure (16) formée par une paroi latérale (2) et un fond (1) munie d'une ouïe d'entrée (7), sur laquelle vient s'emboîter une partie supérieure (17) comportant un couvercle (2) muni d'une ouïe de sortie (8), une cloison fixe (9) disposée entre la partie inférieure et supérieure, un piston (11) de forme cylindrique disposé de façon excentrique et guidé cinématiquement dans la chambre par l'intermédiaire de la cloison (9) dans une fente (15) dudit piston, un filtre (20) emmanché sur ladite chambre (30) destiné à filtrer le liquide pénétrant dans l'ouïe d'entrée, et un joint d'étanchéité (49) destiné à forcer l'écoulement du liquide à travers la chambre de mesure en évitant l'écoulement direct du liquide d'une tubulure d'admission vers une tubulure d'évacuation du compteur,
ledit procédé consistant à fabriquer au moins l'un desdits éléments par un procédé de moulage par injection au moyen d'un moule de forme adaptée audit élément à fabriquer, **caractérisé en ce que** le procédé comporte les étapes suivantes:
- injecter un premier matériau pour former au moins une partie d'une peau de l'élément, puis
- injecter au moins un second matériau, présentant des caractéristiques mécaniques différentes du premier matériau, pour former une âme de l'élément.

2. Procédé de fabrication selon la revendication 1, **caractérisé en ce que** le procédé consiste à fabriquer le piston (11) en injectant en tant que premier matériau (32), un matériau ayant un coefficient de frottement faible pour former la peau (34) du piston, puis en injectant en tant que second matériau (35), un matériau plastique présentant une résistance mécanique élevée pour former l'âme (36) du piston.

3. Procédé de fabrication selon la revendication 1, **caractérisé en ce que** le procédé consiste à fabriquer le piston (11) en injectant le premier matériau (32) pour former la peau (34) du piston, puis en injectant le second matériau (35) pour former l'âme (36) du piston, le premier matériau (32) étant plus résistant que le second matériau (35).

4. Procédé de fabrication selon la revendication 1, **caractérisé en ce que** le procédé consiste à fabriquer le piston (11) en injectant en tant que premier matériau (32), un matériau ayant une masse volumique faible pour former la peau (34) du piston, puis en injectant en tant que second matériau (35), un matériau plastique présentant une résistance mécanique élevée pour former l'âme (36) du piston.

5. Procédé de fabrication selon la revendication 1, **caractérisé en ce que** le procédé consiste à fabriquer le piston (11) en injectant en tant que premier matériau (32), un matériau élastomère pour former la peau du piston (34), puis en injectant en tant que second matériau (35), un matériau en plastique rigide pour former l'âme (36) du piston.

6. Procédé de fabrication selon l'une des revendications 2 à 5, **caractérisé en ce que** le procédé consiste en outre à positionner des éléments en matériau de masse volumique faible dans le moule avant les étapes d'injection.

7. Procédé de fabrication selon la revendication 1, **caractérisé en ce que** le procédé consiste à fabriquer la partie inférieure (16) en injectant en tant que premier matériau (42), un matériau ayant un coefficient de frottement faible pour former au moins les surfaces de la peau (44) en contact avec le piston, puis en injectant en tant que second matériau (45), un matériau plastique présentant une résistance mécanique élevée pour former l'âme (46) de ladite partie inférieure.

8. Procédé de fabrication selon la revendication 7, **caractérisé en ce que** le procédé comporte en outre une étape d'injection destinée à intégrer un joint d'étanchéité (49) à la partie inférieure (16), ladite étape consistant à injecter en tant que troisième matériau (47), un matériau élastomère pour former le joint d'étanchéité.

9. Procédé de fabrication d'un compteur de liquide volumétrique du type à piston oscillant comprenant une chambre de mesure cylindrique (30) comportant les éléments suivants :
une partie inférieure (16) formée par une paroi latérale (2) et un fond (1) munie d'une ouïe d'entrée (7), sur laquelle vient s'emboîter une partie supérieure (17) comportant un couvercle (2) muni d'une ouïe de sortie (8), une cloison fixe (9) disposée entre la partie inférieure et supérieure, un piston (11) de forme cylindrique disposé de façon excentrique et guidé cinématiquement dans la chambre par l'intermédiaire de la cloison (9) dans une fente (15) dudit piston, un filtre (20) emmanché sur ladite chambre (30) destiné à filtrer le liquide pénétrant dans l'ouïe d'entrée, et un joint d'étanchéité (49) destiné à forcer l'écoulement du liquide à travers la chambre de mesure en évitant l'écoulement direct du liquide d'une tubulure d'admission vers une tubulure d'évacuation du compteur,
ledit procédé consistant à fabriquer la partie inférieure (16) avec un joint d'étanchéité (49) intégré par un procédé de moulage par injection au moyen d'un moule de forme adaptée à la fabrication de ladite partie inférieure, **caractérisé en ce que** le procédé comporte les étapes suivantes:
- injecter un premier matériau pour former la paroi latérale et le fond de la partie inférieure de la chambre de mesure, puis
- injecter un second matériau, ledit matériau étant un élastomère, pour former le joint d'étanchéité.

10. Procédé de fabrication selon la revendication 1, **caractérisé en ce que** le procédé consiste à fabriquer la partie supérieure (17) en injectant en tant que premier matériau (52), un matériau ayant un coefficient de frottement faible pour former au moins les surfaces de la peau (54) en contact avec le piston, puis en injectant en tant que second matériau (55), un matériau plastique présentant une résistance mécanique élevée pour former l'âme (56) de ladite partie supérieure.

11. Procédé de fabrication d'un compteur de liquide volumétrique du type à piston oscillant comprenant une chambre de mesure cylindrique (30) comportant les éléments suivants :
une partie inférieure (16) formée par une paroi latérale (2) et un fond (1) munie d'une ouïe d'entrée (7), sur laquelle vient s'emboîter une partie supérieure (17) comportant un couvercle (2) muni d'une ouïe de sortie (8), une cloison fixe (9) disposée entre la partie inférieure et supérieure, un piston (11) de forme cylindrique disposé de façon excentrique et guidé cinématiquement dans la chambre par l'intermédiaire de la cloison (9) dans une fente (15) dudit piston, un filtre (20) emmanché sur ladite chambre (30) destiné à filtrer le liquide pénétrant dans l'ouïe d'entrée, et un joint d'étanchéité (49) destiné à forcer l'écoulement du liquide à travers la chambre de mesure en évitant l'écoulement direct du liquide d'une tubulure d'admission vers une tubulure d'évacuation du compteur,
consistant à fabriquer le filtre avec un joint d'étanchéité intégré par un procédé de moulage par injection au moyen d'un moule de forme adaptée à la fabrication dudit filtre, **caractérisé en ce que** le procédé comporte les étapes suivantes:
- injecter un premier matériau pour former la paroi latérale et le fond du filtre, puis
- injecter un second matériau, ledit matériau étant un élastomère, pour former le joint d'étanchéité.

12. Compteur de liquide volumétrique du type à piston oscillant comprenant une chambre de mesure cylindrique (30) comportant les éléments suivants :
une partie inférieure (16) formée par une paroi latérale (2) et un fond (1) munie d'une ouïe d'entrée (7), sur laquelle vient s'emboîter une partie supérieure (17) comportant un couvercle (2) muni d'une ouïe de sortie (8), une cloison fixe (9) disposée entre la partie inférieure et supérieure, un piston (11) de forme cylindrique disposé de façon excentrique et guidé cinématiquement dans la chambre par l'intermédiaire de la cloison (9) dans une fente (15) dudit piston, un filtre (20) emmanché sur ladite chambre (30) destiné à filtrer le liquide pénétrant dans l'ouïe d'entrée, et un joint d'étanchéité (49) destiné à forcer l'écoulement du liquide à travers la chambre de mesure en évitant l'écoulement direct du liquide d'une tubulure d'admission vers une tubulure d'évacuation du compteur,
ledit compteur est **caractérisé en ce qu'**au moins un élément formant la chambre est constitué d'au moins deux matériaux présentant des caractéristiques mécaniques différentes et est fabriqué par un procédé d'injection multi-matières selon l'une des revendications précédentes.

13. Compteur de liquide volumétrique selon la revendication 12, dans lequel le piston (11) est constitué d'une âme (36) en matériau plastique présentant une résistance mécanique élevée et d'une peau (34) en matériau ayant un coefficient de frottement faible.

14. Compteur de liquide volumétrique selon la revendication 12, dans lequel le piston (11) est composé d'une âme (36) en matériau plastique et d'une peau (34) en matériau plastique plus résistant que le matériau de l'âme.

15. Compteur de liquide volumétrique selon la revendication 12, dans lequel le piston (11) est constitué d'une âme (36) en matériau plastique présentant une résistance mécanique élevée et d'une peau (34) en matériau présentant une masse volumique faible.

16. Compteur de liquide selon la revendication 12, dans lequel le piston (11) est constitué d'une âme (36) en matériau rigide et d'une peau (34) en matériau élastomère.

17. Compteur de liquide volumétrique selon l'une des revendications 12 à 16, dans lequel le piston est constitué d'une âme en matériau plastique présentant une résistance mécanique élevée dans lequel sont noyés des éléments en matériau présentant une masse volumique faible.

18. Compteur de liquide volumétrique selon la revendication précédente, dans lequel les éléments sont en forme de cylindre.

19. Compteur de liquide volumétrique selon la revendication 12, dans lequel la partie inférieure (16) est composée d'une âme (46) en matériau plastique présentant une résistance mécanique élevée et au moins les surfaces de la peau (44) en contact avec le piston en matériau ayant un coefficient de frottement faible.

20. Compteur de liquide volumétrique selon la revendication précédente, dans lequel la paroi latérale de la partie inférieure comporte un joint d'étanchéité (49) intégré sous forme d'une protubérance en matériau élastomère.

21. Compteur de liquide volumétrique selon la revendication 12, dans lequel le filtre est composé d'un matériau plastique présentant une résistance mécanique élevée et intègre un joint d'étanchéité sous forme d'une protubérance en matériau élastomère.

22. Compteur de liquide volumétrique selon la revendication 12, dans lequel la partie supérieure (17) est composée d'une âme (56) en matériau plastique présentant une résistance mécanique élevée et au moins les surfaces de la peau (54) en contact avec le piston en matériau ayant un coefficient de frottement faible.
